# EUROPEAN PATENT APPLICATION

(11) **EP 1 463 241 A1**
(43) Date of publication of application: **29.09.2004**
(21) Application number: 03100806.3
(22) Date of filing: 28.03.2003
(51) Int. Cl.: H04L 12/28, H04L 12/56, H04L 29/06

(54) **Method of interference control and radio terminal equipment arrangement**

(71) Applicant: Nokia Corporation, 02150 Espoo (FI)
(72) Inventor: Vallström, Jari, 90570, Oulu (FI); Lilja, Harri, 90460, Oulunsalo (FI)
(74) Representative: Antila, Harri Jukka Tapani

(57) **Abstract**

The invention relates to a radio terminal equipment arrangement and to a method of interference control. The radio terminal equipment arrangement comprises: a cellular core unit (100) and at least one peripheral unit (102, 104), the cellular core unit (100) being configured to communicate with a peripheral unit (102, 104) using a wireless low power radio frequency (LPRF) connection, a peripheral unit (102) being configured to establish an outside LPRF connection to a unit (106) other than the core unit. The core unit (100) is configured to give a control command for adjusting the outside LPRF connection activity of the peripheral unit (102, 104), when another LPRF connection needs to be established by the core unit (100); and the peripheral unit (102) being configured to adjust the outside LPRF connection activity based on the control command received from the core unit (100).

## Description

### Field

The invention relates to a method of interference control and to a radio terminal equipment arrangement, particularly in low-power radio frequency communication.

### Background

Mobile devices enabling both 2.4 gigahertz WLAN (Wireless Local Area Network), such as IEEE802.11b, and 2.4 gigahertz Bluetooth connections are about to take place. Such mobile devices, with both WLAN and Bluetooth connections, can be intelligent accessories for Bluetooth equipped devices. A mobile device can also be a peripheral unit of a radio terminal equipment arrangement, the peripheral unit comprising both WLAN and Bluetooth features. Multipart radio terminal equipment arrangements can include a very small cellular core unit and a number of optimized peripheral units. The peripheral units of the multipart radio terminal equipment arrangement are optimized for specific tasks and all the peripheral units are connected to a core unit by low power radio frequency (LPRF) connections, such as Bluetooth connections. A given peripheral unit optimized for messaging and browsing, for example, may include WLAN and thus, the Internet can be browsed either via WLAN connection or via the core unit GPRS (General Packet Radio Service)/EDGE (Enhanced Data rates for Global Evolution) connection, when the peripheral unit is connected to the core unit with the Bluetooth connection.

A problem with the two LPRF connections, such as the WLAN and the Bluetooth connections, is that they operate exactly at the same 2.4 gigahertz frequency bands. The two air interfaces cause interference to each other when operated in close proximity. When the transmitter of the WLAN is active, interference is caused to Bluetooth connection, for example. This is because the power used by the WLAN is relatively high. In the multipart radio terminal equipment arrangement, it is necessary that the user can be informed about incoming calls in all peripherals. That is, while the user is browsing the Internet with a WLAN connection he or she has to be informed about an incoming call into the same device. If the information about the incoming call comes via the core unit and via the Bluetooth connection, a situation occurs where the Bluetooth and the WLAN connections have to be used at the same time.

WLAN vs. Bluetooth interference appears also in a situation in which the user of a mobile device browses the Internet by using a WLAN connection and at the same time uses some other peripheral unit for making phone calls. Then, the other peripheral unit needs to use a Bluetooth connection for connecting itself to the core unit.

Typically, in the multipart architectures it is the Bluetooth connection that has a higher priority over the WLAN connection. The interference caused by the WLAN connection, however, decreases the quality of the multipart data transmission to an unacceptable level. When the WLAN and the Bluetooth connections are established at the same time, conflict may occur between the two connections that will cause them to disconnect or at least the quality of service may become very poor. The Bluetooth technology requires hopping of channels. Therefore, Bluetooth may hop into the same frequency as the WLAN connection, causing interference.

### Brief description of the invention

An object of the invention is to provide an improved method of interference control and an improved radio terminal equipment arrangement. According to an aspect of the invention, there is provided a method of interference control in a radio terminal equipment arrangement comprising: a cellular core unit and at least one peripheral unit, the cellular core unit communicating with a peripheral unit using a wireless low power radio frequency (LPRF) connection, the method comprising: establishing an outside LPRF connection to a unit other than the core unit by a peripheral unit. The method further comprises: giving a control command by the core unit for adjusting the outside LPRF connection activity of the peripheral unit when another LPRF connection needs to be established by the core unit, the other LPRF connection operating on the same frequency band as the outside LPRF connection of the peripheral unit; and adjusting the outside LPRF connection activity of the peripheral unit based on the control command received from the core unit. According to another aspect of the invention, there is provided a radio terminal equipment arrangement, comprising: a cellular core unit and at least one peripheral unit, the cellular core unit being configured to communicate with a peripheral unit using a wireless low power radio frequency (LPRF) connection, a peripheral unit being configured to establish an outside LPRF connection to a unit other than the core unit. The core unit is further configured to give a control command for adjusting the outside LPRF connection activity of the peripheral unit when another LPRF connection needs to be established by the core unit, the other LPRF connection operating on the same frequency band as the outside LPRF connection of the peripheral unit; and the peripheral unit is configured to adjust the outside LPRF connection activity based on the control command received from the core unit.

Preferred embodiments of the invention are described in the dependent claims.

The method and arrangement of the invention provide several advantages. Interference free LPRF connections are achieved in multipart environments, where LPRF connections on the same frequency band are used. The method and arrangement of the invention are easy to implement.

### List of drawings

In the following, the invention will be described in greater detail with reference to the preferred embodiments and the accompanying drawings, in which
Figure 1 shows an example of a structure of a radio system;
Figure 2 shows another example of the structure of a radio system, and
Figure 3 shows an example of a method of interference control in a radio system.

### Description of embodiments

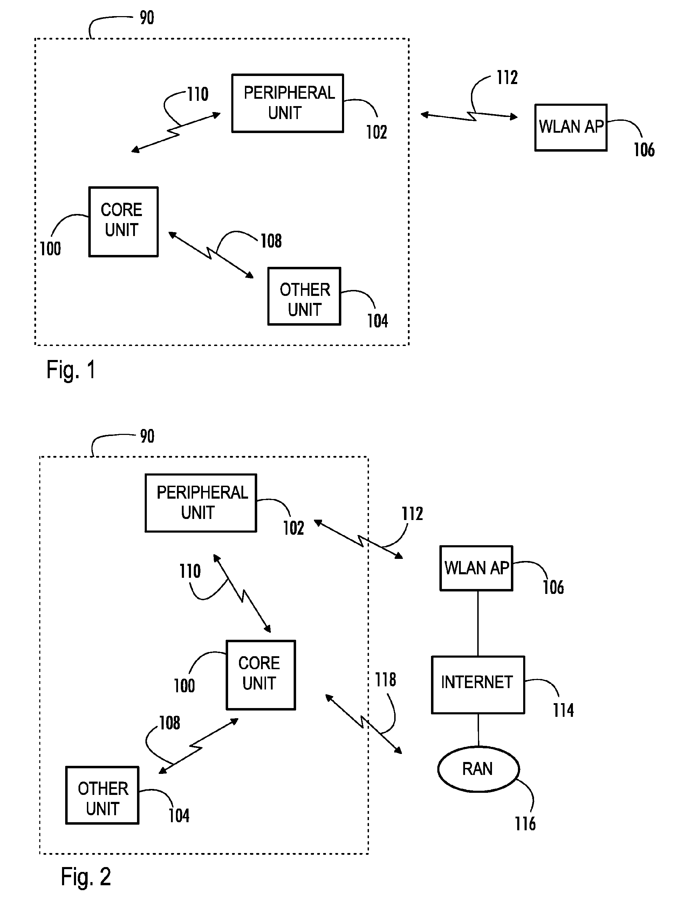

With reference to Figure 1, examine an example of a structure of a radio system to which the preferred embodiments of the invention can be applied. A radio terminal equipment arrangement 90 in Figure 1 comprises a core unit 100 and a number of optimized peripheral units 102, 104. The radio terminal equipment arrangement 90 is a multipart radio terminal, for example. The core unit 100 is a small cellular core unit without a display or any user interface parts, for example. Basic phone calls cannot be made or answered by the core unit 100 alone, for example, because it lacks a user interface or the user interface part is very minimal. The core unit 100 may be a "dummy black-box device", almost invisible to the user, and thus it does not indicate incoming calls or SMS (Short Message Service) messages. In practice, the core unit 100 is placed in a user's handbag, belt or a pocket, for example.

The peripheral units 102, 104 in the radio terminal equipment arrangement 90 are optimized for specific tasks. One of the peripheral units is optimized for making basic phone calls and another peripheral unit is optimized for messaging and browsing or for imaging and music, for example. The peripheral units 102, 104 communicate with the core unit 100 with low power radio frequency (LPRF) connections 108, 110, such as Bluetooth or WLAN connections. The core unit 100, on the other hand, is configured to communicate with other systems, such as the Internet, with LPRF connections and with GSM/GPRS/EDGE connections as well, for example.

In the radio system of Figure 1, the peripheral unit 102 of the radio terminal equipment arrangement 90 is configured to establish outside LPRF connections, such as WLAN (Wireless Local Area Network) connections 112 via a WLAN Access Point 106 to other systems, such as the Internet, for example. The peripheral unit 102 is configured to establish both Bluetooth and WLAN connections, for example.

In an embodiment of the invention, the peripheral unit 102 is configured to establish an outside LPRF connection 112, such as a WLAN connection, to a unit other than the core unit 100. The core unit 100 is further configured to give a control command for adjusting the outside LPRF connection 112 activity of the peripheral unit 102 when another LPRF connection 108, such as a Bluetooth connection, to another unit 104 needs to be established by the core unit 100. The other unit 104 is another peripheral unit of the radio terminal equipment arrangement 90, for example. In an embodiment of the invention, the other unit is the same peripheral unit 102 that is configured to establish the outside LPRF connection 112. Thus, the other LPRF connection 110 is between the core unit 100 and the peripheral unit 102. The other LPRF connection 108 is operating on the same frequency band as the outside LPRF connection 112 of the peripheral unit 102. The peripheral unit 102 is configured to adjust the outside LPRF connection 112 activity based on the control command received from the core unit 100. The core unit is configured to establish the other LPRF connection 108 after when the peripheral unit 102 has adjusted the outside LPRF connection 112 activity.

The peripheral unit 102 is configured to adjust the outside LPRF connection 112 by decreasing the power of the outside LPRF connection 112, for example. The outside LPRF connection 112 being a WLAN connection, the power is decreased by reducing the power used by the WLAN transmitter, for example. The outside LPRF connection 112 can be adjusted also by restricting the use of the outside LPRF connection 112, for example, or by pausing the outside LPRF connection 112 activity altogether or for a predetermined period of time. Thus, when the core unit 100 establishes the other LPRF connection 108, the outside LPRF connection 112 is not causing interference to the other LPRF connection 108.

In an embodiment of the invention, the peripheral unit 102 is configured to inform the core unit 100 about the outside LPRF connection 112 being established. Thus, only after the peripheral unit 102 has informed the core unit 100 is the outside LPRF connection 112 established. In another embodiment of the invention, the peripheral unit 102 is also configured to inform the core unit 100 when the outside LPRF connection 112 ends.

In an embodiment of the invention, the peripheral unit 100 is configured to periodically pause the established outside LPRF connection 112 activity and to listen to the core unit 100 during the pause via a LPRF connection 110, such as a Bluetooth connection. This is carried out in order to resolve whether the core unit 100 has control commands for the peripheral unit 102 for adjusting the outside LPRF connection 112 activity. A Bluetooth sleep mode techniques, such as a Sniff period, may be used in order to resolve whether the core unit 100 has control commands for adjusting the outside LPRF connection 112 activity. In the Bluetooth Sniff period technique, the peripheral unit 102 periodically listens to the core unit 100 at a reduced rate. The Bluetooth Sniff period interval is adjustable. During the time the peripheral unit 102 listens to the core unit 100, the power of the outside LPRF connection 112 is reduced, for example. It is thus also possible that the outside LPRF connection 112 is cut during the Bluetooth Sniff period. Thus, listening to the core unit 100 is prioritized such that no outside LPRF connection 112 traffic is sent while the core unit 100 is listened to, for example.

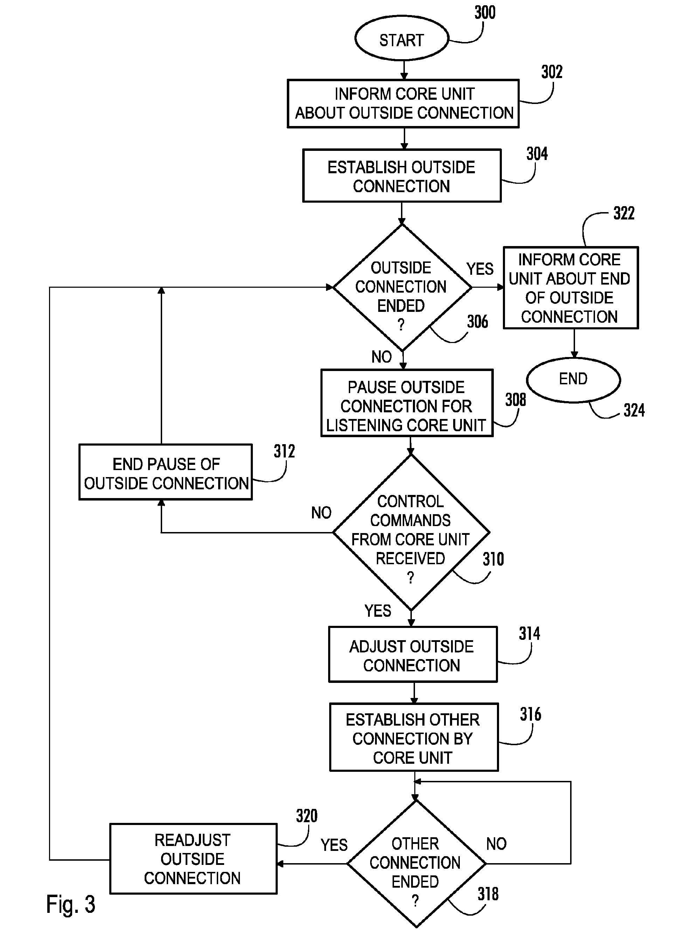

With reference to Figure 2, examine an example of a structure of a radio system to which the preferred embodiments of the invention can be applied. The radio terminal equipment arrangement 90 in Figure 2 comprises a core unit 100 and a number of optimized peripheral units 102, 104. The core unit 100 communicates with the peripheral units 102, 104 using a LPRF connection, which in this example is a Bluetooth connection 108, 110. The core unit 100 can establish connections also between the peripheral units 102, 104 and other systems, such as the Internet 114 or other radio terminals, via a radio access network (RAN) 116 by using a GSM or a GPRS/EDGE connection 118, for example.

The peripheral unit 102 is configured to establish an outside LPRF connection 112 to a unit other than the core unit 100. In the example of Figure 2, the outside LPRF connection 112 is a WLAN connection and the unit other than the core unit 100 is the Internet 114 to which the WLAN connection 112 is established via a WLAN access point 106, for example. The outside LPRF connection 112 may also be a Bluetooth connection, for example. The peripheral unit 102 may also establish a connection to the Internet 114 via the core unit 100. Thus, the core unit 100 establishes, for example, a GRPS/EDGE connection to the Internet and the peripheral unit 102 communicates with the core unit 100 via the Bluetooth connection 110.

In an embodiment of the invention, the peripheral unit 102 needs to establish a WLAN connection 112 to the Internet 114 and before establishing the WLAN connection 112 the peripheral unit 102 is configured to inform the core unit 100 about the WLAN connection 112 being established. It is also feasible that the peripheral unit 102 establishes the WLAN connection 112 without informing the core unit 100 about it.

In the example of Figure 2, after the peripheral unit 102 has established a WLAN connection 112, the core unit 100 needs to establish another LPRF connection, here a Bluetooth connection 108, to the other peripheral unit 104. The other peripheral unit 104 is needed to establish a phone call via the core unit 100, for example. Before the Bluetooth connection 108 between the core unit 100 and the other peripheral unit is established, the core unit 100 gives a control command for adjusting the WLAN connection 112 activity of the peripheral unit 102.

In an embodiment of the invention, the peripheral unit 102 is configured to periodically pause the WLAN connection 112 activities in order to communicate with the core unit 100 and to resolve whether the core unit 100 has control commands for adjusting the WLAN connection 112 activity of the peripheral unit 102. During the pauses a Bluetooth connection 110, for example, is established between the core unit 100 and the peripheral unit 102. Thus, a Bluetooth Sniff period technique may be used in the communication between the core unit 100 and the peripheral unit 102.

The peripheral unit 102 is configured to adjust the WLAN connection 112 activity when the control command for adjusting the WLAN connection 112 activity from the core unit 100 is received in the peripheral unit 102. Based on the control command for adjusting the WLAN connection 112 activity, the peripheral unit 102 is configured to decrease the power of the WLAN connection 112, for example. In an embodiment of the invention, the power of the WLAN connection is turned off or only a low power is used based on the control command for adjusting the WLAN connection 112 activity. It is also feasible that the use of the WLAN connection 112 is restricted based on the control command. In an embodiment of the invention, the Bluetooth connection 108 to be established between the other peripheral unit 104 and the core unit 100 is prioritized such that no WLAN connection 112 traffic is sent while the Bluetooth connection 112 is active, for example.

The Bluetooth connection 108 between the core unit 100 and the other peripheral unit 104 is established when the WLAN connection 112 activity of the peripheral unit 102 has been adjusted. The core unit 100 then establishes a basic phone call via a radio access network 116 to another radio terminal, for example. It is thus also possible that the core unit 100 needs to establish the other LPRF connection, such as a Bluetooth connection, to any of the peripheral units 102, 104 in order to communicate an incoming call to the peripheral unit 102, 104. Thus, the other LPRF connection is a Bluetooth connection between the peripheral unit 102 and the core unit 100, for example.

In an example of Figure 2, the peripheral unit 102 is configured to continue to periodically listen to the core unit 100 in order to resolve whether the WLAN connection 112 can be restored. The core unit 100 informs the peripheral unit 102 when the Bluetooth connection 108 between the core unit 100 and the other peripheral unit 104 ends, for example. In an embodiment of the invention, the core unit 100 gives control commands to readjust the WLAN connection 112 activity of the peripheral unit 102. Then, the peripheral unit 102 may readjust the WLAN connection 112 activity to the same level as before the WLAN connection 112 of the peripheral unit 102 was adjusted. If the WLAN connection 112 were turned off, for example, during the Bluetooth connection 108 between the core unit 100 and the other peripheral unit 104, the peripheral unit 102 would be configured to turn the WLAN connection 112 back on again. Further, if the WLAN connection 112 were on low power during the Bluetooth connection 108 between the core unit 100 and the other peripheral unit 104, the peripheral unit 102 would be configured to raise the power to a higher level, for example.

In an embodiment of the invention, the peripheral unit 102 is further configured to inform the core unit 100 when the WLAN connection 112 of the peripheral unit 102 ends. Thus, the core unit 100 has always information about the states of the outside LPRF connections of the peripheral units of the radio terminal equipment arrangement 90, for example.

Figure 3 shows an example of a method of interference control in a radio terminal equipment arrangement comprising a cellular core unit and at least one peripheral unit. In the method of interference control, the cellular core unit communicates with the peripheral unit using a wireless low power radio frequency (LPRF) connection, the LPRF connection in this example being a Bluetooth connection. The method starts in 300. In 302, a peripheral unit of the radio terminal equipment arrangement informs the core unit about an outside LPRF connection being established. The user of the radio terminal equipment arrangement wishes to browse the Internet or to make a basic phone call by using the peripheral unit of the radio terminal equipment arrangement, for example, and therefore the outside LPRF connection, a WLAN connection in this example, needs to be established. However, before establishing the WLAN connection the peripheral unit informs the core unit about its intentions.

In 304, the peripheral unit establishes the outside LPRF connection, here, the WLAN connection, to the Internet, for example. In 306, if it is detected that the outside LPRF connection of the peripheral unit continues, the process moves to 308 where the WLAN connection is paused in order to communicate with the core unit of the radio terminal equipment arrangement and in order to resolve whether the core unit has control commands for the peripheral unit for adjusting the WLAN connection activity. The peripheral unit communicates with the core unit via a Bluetooth connection, for example. Thus, a Bluetooth Sniff period technique may be used to resolve whether the core unit has control commands for adjusting the WLAN connection activity to communicate to the peripheral unit. If in 310 no control commands for adjusting the WLAN connection activity are received from the core unit, the process moves to 312 is entered where the pause of the WLAN connection is ended. Then, after a predetermined time interval and assuming that the WLAN connection of the peripheral unit still continues, the process returns to 308 where the WLAN connection is paused for listening to the core unit. The predetermined time interval is a Bluetooth Sniff period interval, for example, and it can be set to a desired length. If, in 310, control commands are received from the core unit, the process moves to 314 is entered.

In 314, the WLAN connection activity is adjusted based on the control commands received from the core unit. The WLAN connection is adjusted by decreasing the power of the WLAN connection, for example. The WLAN connection can be adjusted also by restricting the use of the WLAN connection. The WLAN connection activity may be paused altogether or for a predetermined period of time. In an embodiment of the invention, after the peripheral unit has adjusted the WLAN connection, the core unit is free to establish another connection, such as a Bluetooth connection, to another unit, such as another peripheral unit, without interference from the WLAN connection to the other connection. In 316, the core unit establishes the other LPRF connection, here a Bluetooth connection.

As long as the Bluetooth connection is active, the WLAN connection activity is kept at an adjusted level, for example. In 318, where the Bluetooth connection ends, in an embodiment of the invention, the core unit informs the peripheral unit that the WLAN connection activity can be readjusted again. In 320, the WLAN connection activity is readjusted to the original level, for example. If the WLAN connection had been paused during the other connection being on, in 320 the WLAN connection would be turned on again, for example. After the WLAN connection has been readjusted and if the WLAN connection still continues, the process returns to 308 where the WLAN connection is paused in order to communicate with the core unit and to resolve whether the core unit has control commands for the peripheral unit for adjusting the WLAN connection activity. If, in 306, the WLAN connection ends, then in an embodiment of the invention, process moves to 322 where the peripheral unit informs the core unit about the ending of the WLAN connection of the peripheral unit. The example of the method ends in 324.

Even though the invention has been described above with reference to an example according to the accompanying drawings, it is clear that the invention is not restricted thereto but can be modified in several ways within the scope of the appended claims.

## Claims

1. A method of interference control in a radio terminal equipment arrangement comprising: a cellular core unit and at least one peripheral unit, the cellular core unit communicating with a peripheral unit using a wireless low power radio frequency (LPRF) connection, the method comprising: establishing (304) an outside LPRF connection to a unit other than the core unit by a peripheral unit, **characterized by**:
(310) giving a control command by the core unit for adjusting the outside LPRF connection activity of the peripheral unit when another LPRF connection needs to be established by the core unit, the other LPRF connection operating on the same frequency band as the outside LPRF connection of the peripheral unit; and
(314) adjusting the outside LPRF connection activity of the peripheral unit based on the control command received from the core unit.

2. The method of claim 1, **characterized by** establishing (316) the other LPRF connection by the core unit after when the outside LPRF connection activity of the peripheral unit has been adjusted.

3. The method of claim 1, **characterized by** before establishing the outside LPRF connection, the method further comprising informing (302) the core unit about the outside LPRF connection being established.

4. The method of claim 1, **characterized by** periodically pausing (308) the established outside LPRF connection activity and communicating with the core unit during the pause in order to resolve whether the core unit has control commands for the peripheral unit for adjusting the outside LPRF connection activity.

5. The method of claim 1, **characterized by** using a Bluetooth sleep mode techniques in order to resolve whether the core unit has control commands for adjusting the outside LPRF connection activity.

6. The method of claim 1, **characterized by** the other LPRF connection being established between the core unit and a peripheral unit.

7. The method of claim 6, **characterized by** the other LPRF connection being established between the core unit and the same peripheral unit that establishes the outside LPRF connection.

8. The method of claim 1, **characterized by** the other LPRF connection being established between the core unit and a unit other than a peripheral unit of the radio system.

9. The method of claim 1, **characterized by** the outside LPRF connection being adjusted by decreasing the power of the outside LPRF connection.

10. The method of claim 1, **characterized by** the outside LPRF connection being adjusted by restricting using of the outside LPRF connection.

11. The method of claim 1, **characterized by** the outside LPRF connection being adjusted by pausing the outside LPRF connection activity.

12. The method of claim 1, **characterized by** the outside LPRF connection or the other LPRF connection being a WLAN connection.

13. The method of claim 1, **characterized by** the outside LPRF connection or the other LPRF connection being a Bluetooth connection.

14. The method of claim 1, **characterized by** the outside LPRF connection established by the peripheral unit being a WLAN connection and the other LPRF connection established by the core unit being a Bluetooth connection.

15. The method of claim 1, **characterized by** informing the core unit when the outside LPRF connection ends.

16. A radio terminal equipment arrangement comprising: a cellular core unit (100) and at least one peripheral unit (102, 104), the cellular core unit (100) being configured to communicate with a peripheral unit (102, 104) using a wireless low power radio frequency (LPRF) connection, a peripheral unit (102) being configured to establish an outside LPRF connection to a unit (106) other than the core unit, **characterized by**:
the core unit (100) is further configured to give a control command for adjusting the outside LPRF connection activity of the peripheral unit (102, 104) when another LPRF connection needs to be established by the core unit (100), the other LPRF connection operating on the same frequency band as the outside LPRF connection of the peripheral unit (102); and
the peripheral unit (102) is configured to adjust the outside LPRF connection activity based on the control command received from the core unit (100).

17. A radio terminal equipment arrangement of claim 16, **characterized in that** the core unit (100) is configured to establish the other LPRF connection after when the outside LPRF connection activity of the peripheral unit (102) has been adjusted.

18. A radio terminal equipment arrangement of claim 16, **characterized in that** the peripheral unit (102) is configured to inform the core unit (100) about the outside LPRF connection being established.

19. A radio terminal equipment arrangement of claim 16, **characterized in that** the peripheral unit (102) is further configured to periodically pause the established outside LPRF connection activity and to communicate with the core unit (100) during the pause in order to resolve whether the core unit (100) has control commands for the peripheral unit (102) for adjusting the outside LPRF connection activity.

20. A radio terminal equipment arrangement of claim 16, **characterized in that** the peripheral unit (102) is configured to use a Bluetooth sleep mode techniques in order to resolve whether the core unit (100) has control commands for adjusting the outside LPRF connection activity.

21. A radio terminal equipment arrangement of claim 16, **characterized in that** the core unit (100) is configured to establish the other LPRF connection between the core unit (100) and a peripheral unit (102).

22. A radio terminal equipment arrangement of claim 16, **characterized in that** the core unit (100) is configured to establish the other LPRF connection between the core unit (100) and the same peripheral unit that is configured to establish the outside LPRF connection.

23. A radio terminal equipment arrangement of claim 16, **characterized in that** the core unit (100) is configured to establish the other LPRF connection between the core unit (100) and a unit (116) other than a peripheral unit of the radio system.

24. A radio terminal equipment arrangement of claim 16, **characterized in that** the peripheral unit (102) is configured to adjust the outside LPRF connection by decreasing the power of the outside LPRF connection.

25. A radio terminal equipment arrangement of claim 16, **characterized in that** the peripheral unit (102) is configured to adjust the outside LPRF connection by restricting the use of the outside LPRF connection.

26. A radio terminal equipment arrangement of claim 16, **characterized in that** the peripheral unit (102) is configured to adjust the outside LPRF connection by pausing the outside LPRF connection activity.

27. A radio terminal equipment arrangement of claim 16, **characterized in that** the outside LPRF connection or the other LPRF connection is a WLAN connection.

28. A radio terminal equipment arrangement of claim 16, **characterized in that** the outside LPRF connection or the other LPRF connection is a Bluetooth connection.

29. A radio terminal equipment arrangement of claim 16, **characterized in that** the outside LPRF connection established by the peripheral unit (102) is a WLAN connection and the other LPRF connection established by the core unit (100) is a Bluetooth connection.

30. A radio terminal equipment arrangement of claim 16, **characterized in that** the peripheral unit (102) is configured to inform the core unit (100) when the outside LPRF connection ends.
